# EUROPEAN PATENT APPLICATION

(11) **EP 1 164 477 A2**
(43) Date of publication of application: **19.12.2001**
(21) Application number: 01100909.9
(22) Date of filing: 16.01.2001
(51) Int. Cl.: G06F 9/45

(54) **A loop optimization method and a compiler**

(30) Priority: 16.05.2000 JP 2000143766
(71) Applicant: Hitachi, Ltd., Chiyoda-ku, Tokyo 101-8010 (JP)
(72) Inventor: Miyata, Kenichi, Intell. Prop. Group. Hitachi Ltd., Chiyoda-ku, Tokyo 100-8220 (JP); Motokawa, Keiko, Intell. Prop. Group. Hitachi Ltd., Chiyoda-ku, Tokyo 100-8220 (JP)
(74) Representative: Strehl Schübel-Hopf & Partner

(57) **Abstract**

The present invention provides a loop optimization method and a compiler suitable for improving the execution time of a loop including assumed-shape array. A loop optimizer detects the outermost loop included in a subroutine, then traverse every statements in the outermost loop (including any inner nested loops) to detect array reference to the assumed-shape arrays to register thus detected assumed-shape arrays to the assumed-shape array table. Then for thus registered assumed-shape arrays, the optimizer generates a conditional expression determining whether the first order dimension stride of each array is 1 or not, to form a conditional statement by concatenating the conditional expressions of every elements registered to the assumed-shape array table with the conditional "AND" and then duplicates the loop by copying the outer loop and the loop body entirely in focus at that time to the part to be executed when the condition is TRUE and to the part to be executed when the condition is FALSE.

## Description

### BACKGROUND OF THE INVENTION

### Field of the Invention

The present invention relates to a loop optimization method and a complier suitable for compilation and more particularly to a loop optimization method and a complier suitable for optimizing loops including assumed-shape arrays in order to reduce the execution time of those loops.

### Prior Art

In general, programming languages provides means to define a process flow as a subroutine or a function in order to eliminate repetition of same statements for many times. The value passed to such a subroutine for determining the operation of subroutine is called an "actual parameter", and a variable, which is declared within the subroutine for accepting thus passed actual parameter, is called "formal parameter".

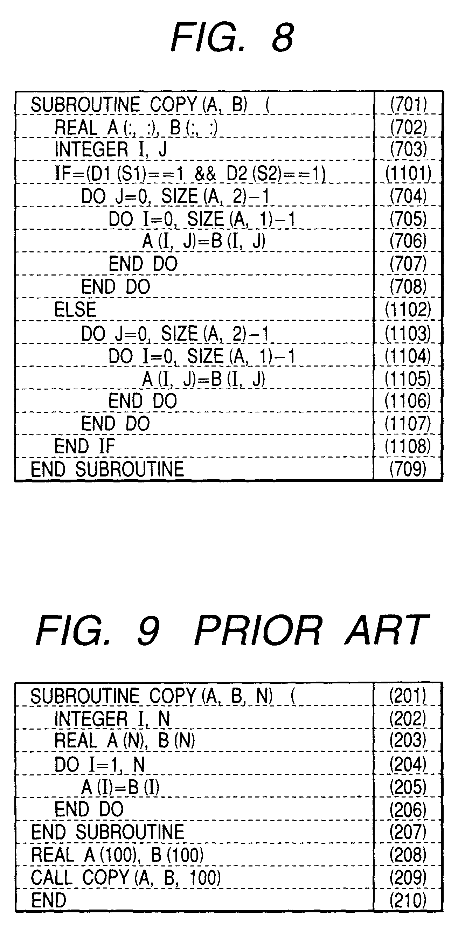

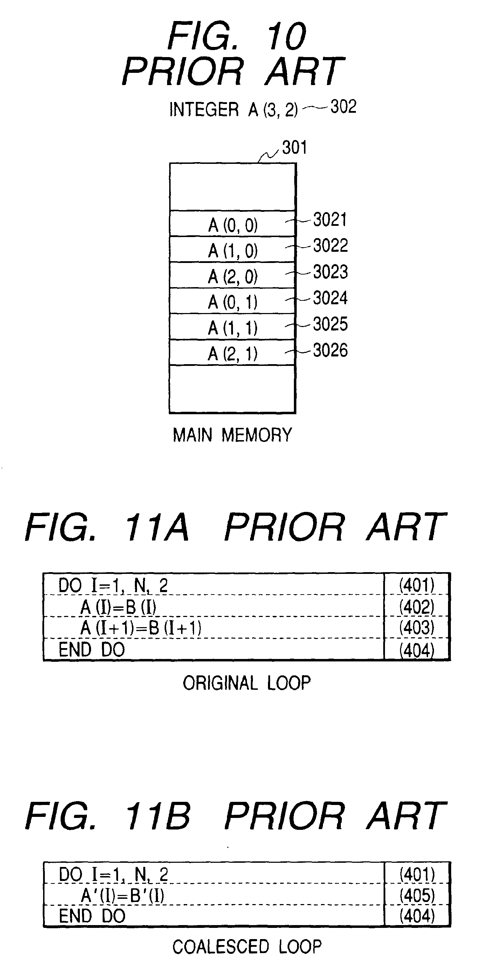

Now referring to the drawings, fig. 9 shows a typical example of subroutine. Fig. 10 shows an arrangement of array elements in the main memory in the language "Fortran". Fig. 11 shows an example of coalescing references to array elements. The loop optimization of the Prior Art will be now described below with reference to Figs. 9 to 11.

In the exemplary subroutine shown in Fig. 9, lines 201 to 207 are definition of the subroutine, lines 208 to 210 are definitions of the main program. The line 201 is a definition that declares a subroutine called "COPY" takes three formal parameters A, B, and N. The line 202 declares that the integer variable I and the formal parameter N are of the integer type. The line 203 is a definition declaring the formal parameters A and B are arrays of real numbers including N elements respectively. The lines 204 to 206 define a loop executing for the variable I to 1 to N. The line 205 is the loop body, which substitute the array element B (I) into the array element A (I). The line 208 is a definition for reserving an area in the main memory for the arrays A and B each having 100 real number elements. The line 209 is a call for a subroutine 201. "A", "B", "100" in the line 209 will be passed to the subroutine 201 as its real parameters.

As can be seen from the example shown in Fig. 9, the data that can be passed as parameters may also be in the form of arrays, in addition to the ordinary numbers. The elements in the array will be placed on the main memory in the order specified by the array dimension and the number of each dimension. The arrangement in the main memory of the array elements used in the Fortran will be now described with reference to Fig. 10. In Fig. 10, the main memory 301 has two dimensional array 302 defined to have elements of integer type. In this example the number of elements in the first dimension is 3, the number in the second dimension is 2. The elements 3021 - 3026 are shown in the arrangement of elements in the array A. The elements in the first dimension will be placed one next to another in the main memory. The shape of the array may be defined here from the number of dimension of the array and the number of elements in each dimension.

When passing an array as an argument to a subroutine, if the target subroutine knows the shape of array previously, a compiler may optimize the loop that refers to the array in the subroutine. As an example of optimization, a coalesce of referred elements of two arrays. This type of optimization is such that, when elements neighboring each other on the memory are referred from within a loop, the reference will be treated as that to the arrayed elements having a size twice of the actual elements (i.e., arrayed elements of 64 bits if the original arrayed elements are real numbers represented by 32 bits) so as to reduce the memory reference instructions which refer to arrayed elements.

An example according to this type of optimization will be described with reference to Fig. 11A and 11B. The original loop of the lines 401 to 404 shown in Fig. 11A means that the loop body in lines 402 and 403 will be executed by updating the variable I from 1 to N by 2. Here if the arrayed elements, A (I) and A (I+1) or B (I) and B (I+1), that are referred to by the lines 402 and 403 are those neighboring in the main memory, these two elements may be considered to be one element having the size of twice. In such assumption, by devising a virtual array A' having elements of the size twice larger than the elements in the array A, as well as a virtual array B' of similar size, a reference to an array after coalescing as shown by the line 405 in Fig. 11B may be obtained. This reduces the number of memory reference instructions in the loop from four to two, allowing acceleration of loop execution.

Fortran 90, new standard of the programming language Fortran, which is frequently used in the field of numeric computation, allows declarations without defining the shape of arrays at the time of declarations of formal parameters, so as to inherit the shape of arrays defined as the actual parameters. The array with a shape inherited from the actual parameters is referred to as an assumed-shape array.

The Fortran 90 may also pass part of an array to a subroutine as an actual parameter. For example, when using a notation of "A (4:10:2)", an array of first dimension having four elements, A (4), A (6), A (8), and A (10). In general, by using the notation of the style "A (L: U: S)", a first dimension array having array elements from an array element A (L) to an element with a subscript not greater than U by updating the subscript by a stride of S may be represented.

In case of assumed-shape array, based on the notation as described above, part of an array actually defined may be processed as an array reference with the stride of 1 in a subroutine, when the part is picked up from the array. That is, it is possible that the array elements that are adjacent in a subroutine may be present at locations distant in the main memory. For example, in a subroutine which receives the partial array A (4:10:2) as described above as an assumed-shape array, the partial array may be considered to have four elements, and the discontinuous references A (4), A (6), A (8) and A (10) in the main memory may be referred to as A (0), A (1), A (2) and A (3) in a subroutine. Thus it seems to apparently refer to a continuous space in the main memory.

Therefore, if the optimization by coalescing the arrayed elements in accordance with the Prior Art as above on the prerequisite that the arrayed elements are placed one adjacent to another in the main memory is applied to an assumed-shape array, the routine will refer to a wrong array element to result in an error. A compiler cannot apply such an optimization. As a result, there will be a problem that the improved performance may not be obtained if the Prior Art as above is applied to the assumed-shape array, even when there exists space for improving the execution speed of a loop.

### SUMMARY OF THE INVENTION

An object of the present invention is to provide a loop optimization method and a compiler using the same, which may overcome the problems with respect to a subroutine taking an assumed-shape array as formal parameter when the optimization of the Prior Art as above is applied to the assumed-shape array, and may output a program or an object module allowing to reduce the time required for executing a loop having reference to the assumed-shape array.

In accordance with the present invention, the above object may be achieved by providing for the loop optimization method by a compiler, the steps of: detecting a loop; registering an assumed-shape array in the loop; and determining whether or not the stride of elements in the assumed-shape array is 1 to distinguish the loop to duplicate the loop.

In accordance with the loop optimization method of the present invention, the opportunity of compiler optimization may be increased, by registering every assumed-shape arrays in a loop, generating a conditional statement determining whether or not the stride in first dimension of every arrays registered is 1, inserting the loop by copying it to the portion that will be executed when the condition is TRUE and to the portion that will be executed when the condition is FALSE in order to ensure the adjacency in the main memory of the arrayed elements of the loop executed when the condition is TRUE. Also, the loop optimization method in accordance with the present invention may output a program, which may reduce the number of instructions in a loop to reduce the loop execution time.

These and other objects and many of the attendant advantages of the invention will be readily appreciated as the same becomes better understood by reference to the following detailed description when considered in connection with the accompanying drawings.

### BRIEF DESCRIPTION OF THE DRAWINGS

Fig. 1 is a schematic block diagram illustrating the architecture of a compiler using the loop optimization method in accordance with one preferred embodiment of the present invention.
Fig. 2 is a schematic block diagram illustrating an exemplary architecture of a computer system, which may compile by means of the loop optimization method in accordance with one preferred embodiment of the present invention.
Fig. 3 is a table illustrating array descriptors.
Fig. 4 is a schematic diagram illustrating an example of assumed-shape array.
Fig. 5 is a schematic diagram illustrating an example of assumed-shape array table.
Fig. 6 is a flow chart illustrating the operation of loop optimizer.
Fig. 7 is a table illustrating an exemplary assumed-shape array that can be obtained as the result of applying the loop optimization method in accordance with one preferred embodiment of the present invention.
Fig. 8 is a schematic diagram illustrating an exemplary program that can be obtained as the result of applying the loop optimization method in accordance with one preferred embodiment of the present invention.
Fig. 9 is a schematic diagram illustrating a subroutine.
Fig. 10 is a schematic diagram illustrating the placement in the main memory of the arrayed elements in case of Fortran.
Fig. 11A to 11B are schematic diagrams illustrating an example of coalescence of array element reference.

### DETAILED DESCRIPTION OF THE PREFERRED EMBODIMENTS

A detailed description of one preferred embodiment of a loop optimization method and a compiler in accordance with the present invention will now be given referring to the accompanying drawings.

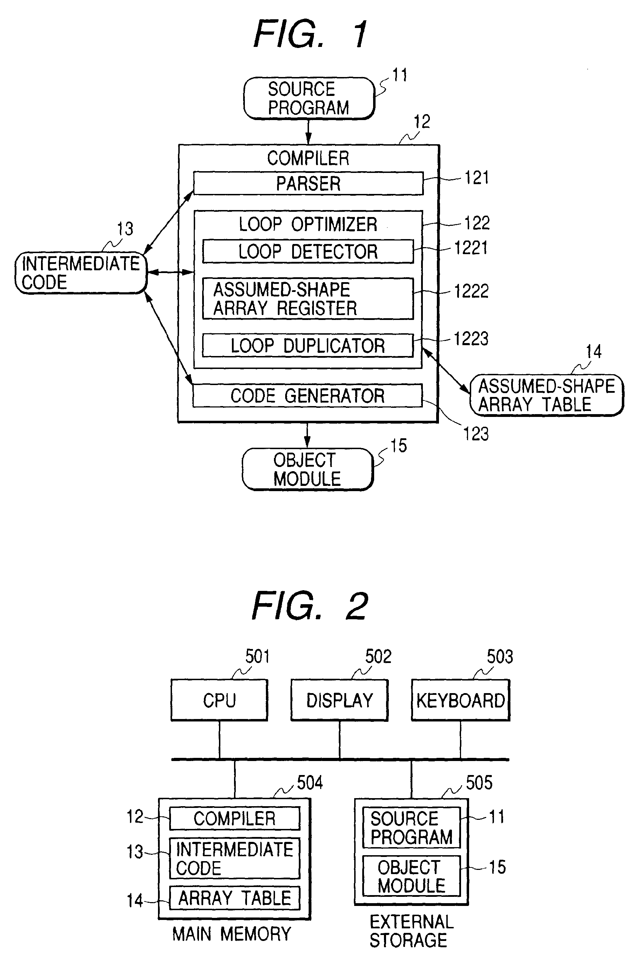

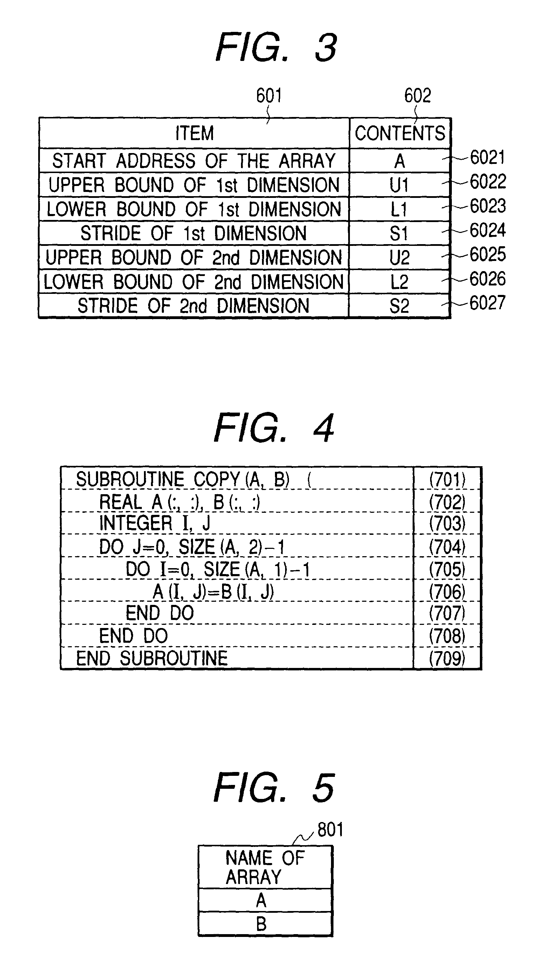

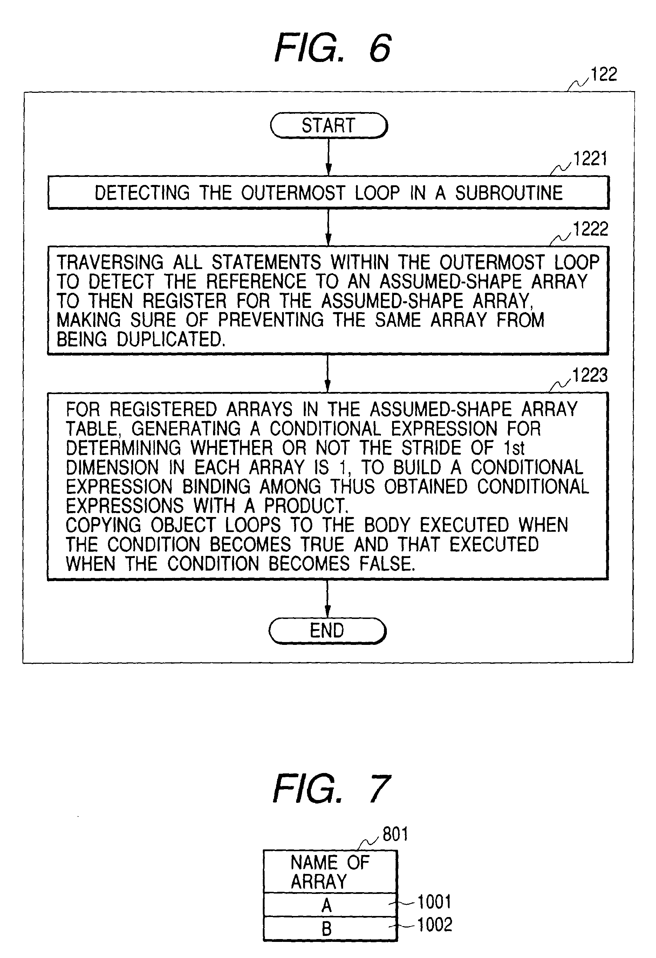

Now referring to drawings, there are shown in Fig. 1 a schematic block diagram of the architecture of a compiler using the loop optimization method in accordance with one preferred embodiment of the present invention; in Fig. 2 a block diagram of an exemplary architecture of a computer system that can compile by means of the loop optimization method in accordance with the preferred embodiment of the present invention; in Fig. 3 a schematic diagram of array descriptors; in Fig. 4 a schematic diagram of an example of assumed-shape array; in Fig. 5 a schematic diagram of an example of assumed-shape array table; in Fig. 6 a flow chart of the operation of loop optimizer; in Fig. 7 a table illustrating an exemplary assumed-shape array that can be obtained as the result of applying the loop optimization method in accordance with one preferred embodiment of the present invention; in Fig. 8 a schematic diagram illustrating an exemplary program that can be obtained as the result of applying the loop optimization method in accordance with one preferred embodiment of the present invention.

A compiler 12, as shown in Fig. 1, comprises a parser 121, a loop optimizer 122, and a code generator 123, and the processing thereof will be performed in this order. The parser 121 may read a source program 11 to generate intermediate code 13 that can be processed in the compiler. The detailed description of parsing will be omitted herein since a well-known method may be used as described in for example, A. V. Aho, et al., "Compilers Principles, Techniques, and Tools", Addison-Wesley, 1986, pp. 25 - 62.

The loop optimizer 122 may then generate and refer to an assumed-shape array table 14 while duplicating the loop subject to be processed. The loop optimizer 122 further comprises a loop detector 1221, an assumed-shape array register 1222, and a loop duplicator 1223. Details thereof will be described later by referring to Fig. 6.

The code generator 123 may generate an object module 15, written in a machine language, based on the intermediate code 13. The details of code generation will be omitted herein since a well-known method may be used as described in for example,
A. V. Aho, et al., "Compilers Principles, Techniques, and Tools", Addison-Wesley, 1986, pp. 513 - 580.

A computer system on which the compiler in accordance with the embodiment of the present invention having the architecture as have been described above may run, comprises as shown in Fig. 2, a CPU 501, a display 502, a keyboard 503, a main memory 504, and an external storage 505. The main memory 504 may store the intermediate code 13 and assumed-shape array table 14, which will be required during compiling, as well as the compiler 12 program. The external storage 505 may store the source program 11 created by the user and the object module 15 generated by the compiler. The compiler 12 processes the source program 11 as input to generate object module 15.

The array descriptors are defined when the assumed-shape array are referenced during compilation, used for passing the assumed-shape array to a subroutine when the program is executed, and as in the example shown in Fig. 3, contains the information about the upper and lower bounds and stride of the array for each dimension. The example shown in Fig. 3 is an array of 2nd order dimension. The array descriptor shown in Fig. 3 is comprised of an item 601 and its contents 602. These items contain the start address of the array A 6021, upper bound of 1st dimension U1 6022, lower bound of 1st dimension L1 6023, stride of 1st dimension S1 6024, upper bound of 2nd dimension U2 6025, lower bound of 2nd dimension L2 6026, and stride of 2nd dimension S2 6027.

In the following description, a notation of "array descriptor (item) " will be used for the reference to the value of each item of the array descriptor. For example, when the name of the array descriptor of the array A is "D" then the stride of the first dimension S1 will be described as "D (S1)". The actual values to be stored in the array descriptor will be unknown during compiling because these values will be written each time a subroutine is called during program execution. However, the array descriptor D will be referred based on the relationship between the array A and the array descriptor D during compiling.

In Fig. 4, an example of assumed-shape array, the line 701 is a subroutine "COPY", which may take the formal parameters A and B. These parameters will be declared to be an assumed-shape array in the line 702. Then by using a symbol ":" where the number of array elements is declared, the shape is assumed from the actual parameters. The line 703 may define the variables I and J of integer type. The lines 704 to 708 may define a nested loop using the variables I and J. SIZE(A, 2) is a function that picks up the size of the second order dimension of the array A. The loop in the lines 704 to 708 indicates that the loop body (705 to 707) will be executed while updating the variable J by the number of elements in the second dimension of the array A. Similarly, the loop in the line 705 to 707 indicates that the loop body 705 to 707 will be executed while updating the variable I by the number of elements in the first dimension of the array A.

Fig. 5 shows an example of the assumed-shape array table 14. The assumed-shape array table 14 is comprised of name of arrays 801, one element for each array. In other words, only one element is registered even with a number of references to the same assumed-shape array A in the loop.

Now referring to the flow chart shown in Fig. 6, the operation of the loop optimizer 122 will be described in greater details.
(1) the loop optimizer 122 detects the outermost loop within the subroutine. The outermost loop means that another loop does not exist which include that loop (step 1221).
(2) the loop optimizer 122 traverses any statements within the outermost loop (including any inner nested loops) to detect the array reference to the assumed-shape array. Whether an array is assume-shape or not may be determined by checking out whether the array is included in the formal parameters of the subroutine and is declared as assume-shape. Then, the optimizer registers thus detected assumed-shape array to the assumed-shape array table 14. While registering, care should be taken so as for the same array not to be duplicated (step 1222).
(3) For the assumed-shape arrays registered in step 1222, a conditional statement is generated for determining whether the first dimension stride is 1 or not in each of arrays. Here, assuming that the array descriptor of the array registered at n-th in the assumed-shape array table is designated to by Dn, the conditional to be generated will be "Dn(S1) == 1". A conditional expression is generated for each of elements registered to the assumed-shape array table to concatenate these expressions with a conditional "AND" operator to form ultimately the conditional expression "D1(S1) == 1 && D2(S1) == 1 && ... && Dn(S1) == 1". Then the optimizer generates a conditional statement including this expression, and duplicates the loop by copying the outer loop and the loop body entirely in focus at that time to the part to be executed when the condition is TRUE and to the part to be executed when the condition is FALSE (step 1223).

Fig. 7 shows an assumed-shape array table obtained as the result of application of the loop optimization method in accordance with the present invention to the program shown in Fig. 4. The program shown in Fig. 4 contains two loops defined, where the loop from the line 705 to the line 707 is inside another loop from the line 704 to the line 708. In this case the outermost loop, the loop from the line 704 to the line 708 will be detected. In this loop, at the line 706, array references A(I, J) and B(I, J) may appear, which are already defined at the line 702 as assumed-shape arrays. These arrays are therefore subject to be registered to the assumed-shape array table. Then the elements 1001 and 1002 shown in Fig. 7 will be registered to the table.

Fig. 8 shows a program obtained as the result of application of the loop optimization method in accordance with the present invention to the program shown in Fig. 4. Since from the assumed-shape array table shown in Fig. 7, the conditional ultimately generated in step 1223 is "D1(S1) == 1 && D2(S1) == 1", the conditional expression will be then generated in the line 1101. The original loop from the line 704 to the line 708 will be put into the part TRUE of the conditional 1101, and a duplicated loop 1103 - 1107 will be put into the part FALSE.

In accordance with this loop optimization method, each element of the first dimension of the array reference within the loop 704 - 708 is ensured to be actually adjacent each to other in the main memory so that a further optimization such as the coalescence of array references and the like may be applied thereto.

Also, a program that may execute the loop optimization method in accordance with the present invention as have been described above in Fig. 6 may be provided by storing it on a recording medium such as FD, MO, DVD, CD, etc., to be used in order to run the compiler.

In accordance with the loop optimization method of the preferred embodiment of the present invention as have been described above, every assumed-shape arrays in a loop will be registered to a table, and a conditional statement for determining whether the first order dimension stride of every arrays registered is 1 or not will be generated. In addition, the original loop will be copied and inserted to the part executed when the condition is TRUE and to the part executed when the condition is FALSE so as to ensure that the array elements in the loop executed when the condition is TRUE may be present adjacent each to other in the main memory. As a result, the opportunity of compiler optimization will be increased.

As have been described above, in accordance with the present invention, a loop optimization method may be obtained which may output a program or an object module enabling the loop execution time to be reduced with reference to the assumed-shape array, as well as a high efficiency compiler using the same may be provided.

It is further to be understood by those skilled in the art that the foregoing description of a preferred embodiment of the disclosed invention is for the purpose of illustration and that various changes and modifications may be made in the invention without departing from the spirit and scope thereof.

## Claims

1. A loop optimization method executed by a compiler, comprising the following steps of:
detecting a loop from within a source program;
registering an assumed-shape array within the loop; and
duplicating the loop by determining whether the stride of elements in the assumed-shape array is 1 or not for selecting said assumed-shape array.

2. A loop optimization method according to claim 1, wherein
said step of detecting said loop is a step of detecting the outermost loop.

3. A loop optimization method according to claim 1, wherein
said step of duplicating said loop includes the following substeps of:
generating a conditional statement for determining whether the stride of first order dimension of every arrays registered is 1 or not; and
copying the loop and inserting into the part to be executed when the condition is TRUE and into the part to be executed when the condition is FALSE.

4. A compiler performing a loop optimization method, comprising the following steps of:
detecting a loop from within a source program;
registering an assumed-shape array within the loop; and
duplicating the loop by determining whether the stride of elements in the assumed-shape array is 1 or not for selecting said assumed-shape array.

5. A computer-readable recording medium, storing a program executing a loop optimization method by a compiler, said method comprises the following steps of:
detecting a loop from within a source program;
registering an assumed-shape array within the loop; and
duplicating the loop by determining whether the stride of elements in the assumed-shape array is 1 or not for selecting said assumed-shape array.
